# EUROPÄISCHE PATENTSCHRIFT

(11) **EP 2 350 547 B1**
(45) Veröffentlichungstag und Bekanntmachung des Hinweises auf die Patenterteilung: **16.04.2014**
(21) Anmeldenummer: 10751554.6
(22) Anmeldetag: 14.07.2010
(51) Int. Cl.: F27D 1/14, C04B 26/10, C04B 28/06

(54) **VERWENDUNG EINER ZU EINEM WÄRMEDÄMMSTOFF SELBST AUSHÄRTENDEN PASTE**
USE OF A PASTE THAT SELF-CURES TO FORM A HEAT-INSULATING MATERIAL
UTILISATION D'UNE PÂTE AUTODURCISSANTE SE TRANSFORMANT DANS UN ISOLANT THERMIQUE

(30) Priorität: 10.08.2009 DE 102009036561
(43) Veröffentlichungstag der Anmeldung: 03.08.2011
(73) Patentinhaber: Calsitherm Verwaltungs Gmbh, 33175 Bad Lippspringe (DE)
(72) Erfinder: SCHNEIDER, Hans-Jürgen, 09600 Oberschöna (DE); HÖLSCHER, Tobias, 33102 Paderborn (DE); HÖLSCHER, Klaus, 33175 Bad Lippspringe (DE)
(86) Internationale Anmeldenummer: PCT/DE2010/000814
(87) Internationale Veröffentlichungsnummer: WO 2011/018065

(56) Entgegenhaltungen:
- EP-A1- 1 160 031
- WO-A1-2007/026936
- WO-A2-02/081122
- DE-C1- 3 803 681
- DATABASE WPI Week 200226 Thomson Scientific, London, GB; AN 2002-199417 XP002609872, & JP 2001 348280 A (ASAHI GLASS CO LTD) 18. Dezember 2001 (2001-12-18)
- E. O. BAATZ: "Concepts réfractaires pour les fours soumis aux attaques alcalins", REFRA KOLLOQUIUM 01.06-04-06.2004, 1. Juni 2004 (2004-06-01), - 4. Juni 2004 (2004-06-04), Seiten 117-130, XP002609873,
- K. KASSAU: ""REFRA-AR LINING" - Une solution réfractaire pour la réduction des phénoménes d'usure en cas d'emploi d'une proportion importante de combustibles secondaires dans les fours à ciment", REFRA KOLLOQUIUM 2004, 1. Juni 2004 (2004-06-01), - 4. Juni 2004 (2004-06-04), Seiten 131-148, XP002609874,

## Beschreibung

Die Erfindung betrifft die Verwendung einer zu einem Wärmedämmstoff selbst aushärtenden Paste enthaltend ein Gemisch aus einem granulat- und/oder pulverförmigen Alkali-Aluminat und einem Erdalkali-Aluminat, Stell- und Stabilisierungsmittel, einen CaO-freien Binder, einen Verflüssiger und einen Abbindeverzögerer.

Ein derartiges Gemisch sowie eine derartige Paste und ein daraus gebildeter Wärmedämmstoff ist aus der EP 1 160 031 A1 bekannt. Als mikroporöses Aluminat ist CaO x 6 Al₂ O₃ mit einer Porosität von etwa 25 % zu einem Anteil von 65 bis 98 M.-% vorgesehen. Als Bindemittel ist Calziumaluminat eingesetzt. Zur Herstellung der Paste wird Wasser eingemischt. Die Paste wird als Beschichtung auf thermisch hoch belastete Werkstücke aufgetragen, z.B. auf Gießrinnen von Metallen für Anwendungen bis 1200 °C. Um eine weitere Temperaturfestigkeit bis 1260 °C zu erreichen, ist die zusätzliche Verwendung einer Grundierung der Werkstücke mit einem Feuerfestkleber vorgesehen, der Alkalien und/oder Borsäure enthält und bei 100 °C angetrocknet wird. Hierdurch bildet sich bei Anwendungen über 550 °C eine oxidationshemmende Glasphase oberflächlich aus. Es sind also zwei verschiedene Beschichtungsvorgänge mit weiteren Arbeitsschritten und Materialien erforderlich. Ein Schutz gegen ein zerstörerisches Eindringen von Alkalidämpfen in den Wärmedämmstoff, die in Verbrennungsanlagen, die bis 1300 °C arbeiten, bildet die bekannte Beschichtung nicht. Ein Alkalialuminat kommt nicht zum Einsatz.

Weiterhin ist aus der WO 2007/026936 A1 eine selbstaushärtende Zementkomposition aus Kalziumaluminatzement bekannt, die mit Polycarboxylatether als Verflüssiger und Weinsäure als Abbindeverzögerer und Methylzellulose als Stellmittel versetzt ist. Die Zement-Wasser-Mischung dient als Blitzzement zur Reparatur von Beton und Mauerwerk. Der ausgehärtete Zement hat eine Dichte zwischen 0,6 und 1,2 g/cm³.

Eine Hochtemperaturanwendung ist nicht vorgesehen und ein Korrosionsschutz ist nicht gegeben. Alkalialuminat kommt nicht zum Einsatz.

Weiterhin ist aus JP 2001 348280 A eine Zementkomposition für eine feuerfeste Zustellung von Abfallverbrennungsöfen mit einer erhöhten Korrosionsresistenz gegenüber Alkali- und Chlorverbindungen bekannt, die 83 - 95 M.-% Magnesiumspinel, Mg Al₂ O₄, als Erdalkalialuminat, und 5 -17 M.-% eines CaO-freien Binders, Tonerdezement, sowie zur Plastifizierung Polycarboxylate sowie Oxal- und Borsäure als Abbindeverzögerer enthält.
Alkalialuminat kommt nicht zum Einsatz.

Weiterhin ist aus der WO 02/081122 A2 eine Zementkomposition bekannt, die aus Kalziumaluminat, insbesondere Trikalziumaluminat und Zementbinder, sowie modifizierten Polycarboxylaten, Stabilisierer, Erstarrungsverzögerer, wie Oxycarbonsäuren, Ausbrennstoffen, wie Zellulosefasern, und einem hydraulischen Bindemittel in Form von Portlandzementklinker besteht. Alkalialuminat kommt nicht zum Einsatz. Der Zement wird für die Gießformenerstellung eingesetzt, weshalb eine hohe Packungsdichte und damit eine hohe Wärmeleitfähigkeit der Form erreicht wird und ihre Porosität ± 10 % beträgt.

Weiterhin ist aus der DE 38 03 681 C1 eine Hochtemperatur-Feuerungsanlage mit einer tragenden Stahlkonstruktion bekannt, von der aus sich durch eine Dämmschicht ein stählerner Anker mit einer dünnen korrosionsschützenden Beschichtung von einer rohrartigen feuerfesten keramischen Hülse umschlossen bis in eine Feuerfestauskleidung in einen Temperaturbereich bis ca. 600 °C erstreckt und dort fixiert ist. Durch die thermischen Wechselbelastungen im Betrieb dringen aggressive Dämpfe in den Spalt zwischen der Hülse und dem Anker, und die dünne Korrosionsschutzschicht wird zerschlissen.

Es ist hinlänglich bekannt, bei Bauwerken die Temperaturfestigkeit von Brandschutzplatten, Stahlträgern oder dergleichen durch feuerhemmende, gegebenenfalls feuerfeste Anstriche und Beschichtungen zu erhöhen. Diese vielfach auf Alkalisilikaten basierenden Anstriche bzw. Beschichtungen neigen jedoch zu einer Rissbildung, wenn sie erhöhten Temperaturen ausgesetzt werden. Es werden deshalb die Alkalisilikate, zumeist als Suspension vorliegend, mit Fasern versetzt, gemäß der DE AS 1471020 oder der DE 1471020 mit Silikatfasem, gegebenenfalls mit Mineralstoffen wie Schiefermehl, bekannt aus der DE AS 1198271 oder anderen anorganischen Komponenten, wie in der DE 3512515 A1 erläutert.

Die vornehmlich auf Silikaten von Natrium und Kalium basierenden Anstriche und Beschichtungen mögen zwar über eine begrenzte Zeit temperaturbeständig und feuerhemmend sein, sie sind jedoch grundsätzlich nicht geeignet, in Feuerungsanlagen Verwendung zu finden, in denen regelmäßig Temperaturen deutlich über 1000 °C auftreten. Um diesen hohen Temperaturen wirksam zu begegnen, sind diese Feuerungsanlagen zumeist mit Feuerfestauskleidungen wie Feuerfestausmauerungen aus Schamotte und/oder aus Calciumsilikatmaterialien und/oder aus Alumosilikatmaterialien und/oder aus Feuerfestbetonen und -massen versehen. Letztere sind zum Teil mit Siliciumcarbid angereichert.

Neben den konventionellen Brennstoffen wie Gas, Kohle oder Öl kommen in diesen Feuerungsanlagen bei der Zement- und Kalkherstellung, bei der Erzeugung metallurgischer Produkte, bei dem Betrieb konventioneller Dampfkraftwerke oder bei Müllverbrennungsanlagen zunehmend Sekundärbrennstoffe zur Verbrennung, unter anderen Altreifen, Altöle und Fette, Lösungsmittel, Kunststoffe und Haushaltsrestmüll. Grundsätzlich können hier unter Sekundärbrennstoffen alle bei einer Verbrennung Wärmeenergie generierende Stoffe verstanden werden.

Als problematisch erweist sich bei deren Verbrennung, dass in die Verbrennungsgase bei Temperaturen um 1300 °C Alkaliverbindungen eingebracht werden, die eine Feuerfestausmauerung aus Schamotte und/oder Calciumsilikatmaterialien und/oder aus Alumosilikatmaterialien und/oder aus Feuerfestbetonen angreifen.

Typische Versagensmerkmale der Feuerfestausmauerung und/oder Auskleidungen sind Aufblühungen, Risse und Abbrüche.

Neben der Feuerfestauskleidung selbst werden durch die Alkaliverbindungen in Form von korrosiven Gasen, Dämpfen, deren Kondensaten, Schmelzen, Salzen oder wässrigen Lösungen auch Stahlkonstruktionen in sehr hohem Maß und insbesondere auch sehr schnell angegriffen. Hiervon sind die tragenden Stahlanker der Feuerungsanlagen betroffen, die bei einem Versagen regelmäßig zu einem Totalausfall der Feuerungsanlage führen.

Eine gängige Gegenmaßnahme besteht darin, die Feuerungsanlagen in einem derart hohen Temperaturbereich zu betreiben, dass die Temperatur der betroffenen Ofenbauteile wie die Feuerfestausmauerung über den Taupunkten der Alkaliverbindungen liegt. Hierdurch wird einer Schädigung der Feuerfestauskleidung sowie der Stahlkonstruktionen durch Alkalikondensatbildung entgegengewirkt. Es wird durch diese Maßnahme allerdings der Brennstoffenergiebedarf um über 30 % erhöht.

Noch kritischer als der erhöhte Energiebedarf, gar als Sicherheitsrisiko muss die durch diese Maßnahme erhöhte Temperatur der die Ofenanlage tragenden Bauteile gesehen werden, beispielsweise Stahlanker, insbesondere in den Vorwärmern und den Kalzinatoren, da die Steifigkeit der Stahlanker drastisch reduziert wird und damit die statische Stabilität und Standsicherheit der gesamten Feuerungsanlagen in Frage gestellt wird.

Vor diesem technischen Hintergrund macht die Erfindung es sich zur Aufgabe, durch geeignete Maßnahmen die Langlebigkeit und Sicherheit kritischer Ofenkomponenten wie die Feuerfestauskleidung und/oder Stahlanker insbesondere durch eine Schutzschicht zu erhöhen, die gegenüber korrosiven Verbindungen von Alkalien in Form von Dämpfen, Schmelzen und Kondensaten sowie wässrigen Lösungen, gleichzeitig gegenüber Chlor- und Schwefelverbindungen sowie auch gegenüber Dämpfen von Metallen wie Zink und Blei weitgehend resistent ist.

Darüber hinaus soll eine derartige Schutzschicht aus thermisch und effizient energetischer Betrachtung nur eine geringe Wärmeleitfähigkeit aufweisen.

Gelöst wird diese technische Problematik durch durch die Verwendung gemäß Anspruch 1.

Die Vorteile einer derartigen Paste liegen auf der Hand. So kann sie als Füllung für Fehlstellen in Feuerfestauskleidungen, in ausgehärteter, stückiger Form als alkaliresistenter Füllstoff in angewandten Feuerfestbetonen oder durch ihre Ausbildung als Feuerfestbeton selbst Verwendung finden. Bei einem derartigen Feuerfestbeton ist die Beständigkeit gegenüber Alkalien deutlich erhöht und wird hierdurch die Lebensdauer von Hochtemperaturanlagen bspw. in der Zement- oder Kalkherstellung um wenigstens das Doppelte erhöht.

Darüber hinaus wird durch die Zugabe des Granulats eine Reduzierung der Wärmeleitfähigkeit des Feuerfestbetons erreicht und damit einhergehend eine Reduzierung der thermischen Belastung und der Korrosion einer Feuerfestauskleidung insgesamt sowie deren Stahlanker und dessen tragende Elemente. Ferner wird hierdurch der Energieverbrauch bei gleichbleibender Produktqualität bspw. eines Zements oder Kalks gesenkt.

Weiter bevorzugt kann die Paste nach der Erfindung als aufgetragene Schutzschicht hochtemperatur- und/oder feuerbelasteter Bauteile wie die der angesprochenen Anker Verwendung finden, wobei deren Geometrie keinerlei Rolle spielt.

Überraschenderweise hat sich darüber hinaus gezeigt, dass die Paste nach der Erfindung als hochtemperaturfester Klebstoff verwendbar ist, insbesondere für ein Verkleben von massiven Teilen aus Alkalialuminat oder aus Erdalkalialuminat.

Die einstellbare Konsistenz der Paste nach der Erfindung sowie eine durch Zugabe von Wasser und/oder eines Abbindeverzögeres einstellbare Topfzeit zwischen 15 Minuten und 3 Stunden erlaubt eine maschinelle Verarbeitung der Paste nach der Erfindung mit herkömmlichen Putzauftragsvorrichtungen. Eine übliche, manuelle Verarbeitung der Paste ist naturgemäß ebenfalls möglich.

Von Vorteil ist ferner, dass die Paste bei Raumtemperatur abbindet. Auch großflächige Reparaturen wie eine Beschichtung oder auch das Verschließen und Abdichten von Fugen und Spalten in der Feuerfestauskleidung kann so in einem Zuge vorgenommen werden. Nach der hydraulischen Bindung und spätestens mit dem Trocknen während der Anfahrphase der Feuerungsanlage ist die Paste zu einem hochtemperaturfesten Wärmedämmstoff ausgehärtet, der über 1300 °C temperaturbeständig ist.

Darüber hinaus hat der nach Aushärten der Paste erhaltene Wärmedämmstoff eine Rohdichte zwischen 0,3 g/cm³ und 1,0 g/cm³ aufweisend, somit vergleichsweise leicht, und eine Porösität zwischen 60 % und 90 % aufweisend, wobei die hohe, feine Porosität zum einen nur eine geringe Wärmeleitfähigkeit zwischen 0,15 W/(mK) und 0,7 W/(mK) zulässt sowie Kristallkeimen und/oder Phasengrenzen nur kurze Wachstumsstrecken zur Verfügung stellt, so dass sich auch durch Temperaturwechselbelastungen keine tiefen Risse oder Spalten bilden können.

Bei einer Zusammensetzung der Paste ist vorgesehen, dass das Gemisch ein granulat- und/oder pulverförmiges Alkalialuminat und ein granulat- und/oder pulverförmiges Erdalkalialuminat, einen caO-freien Binder, einen Verflüssiger, Stell- und Stabilisierungsmittel und einen Abbindeverzögerer aufweist.

Das Alkalialuminat, beispielsweise gemäß DE 10 2005 052 380 A1, ein Alkali-β-Aluminat, sollte, als Granulat vorliegend, eine Korngröße kleiner als 15 mm aufweisen, als fein aufgemahlenes Pulver eine Korngröße kleiner als 63 µm aufweisen.

Ebenso kann ein Granulat auf Basis eines Endalkali-Granulats verwendet werden.

Der Anteil des Aluminats an dem Gemisch sollte zwischen 60 M.-% und 85 M.-% liegen.

Neben einem hydraulischen Binder, vorzugsweise auf einer Tonerdebasis, insbesondere auch ein Feuerfestmaterial,wie ein Feuerfestbeton bspw. auf Tonerdebasis, kann alternativ auch ein organischer Binder, beispielsweise auf Phenolharzbasis, Verwendung finden.

Wird ausgehärtete Paste als stückiger Füllstoff einem Feuerfestbeton zugesetzt oder wird als Binder eine Feuerfestmasse verwendet, kann deren Anteil bzw. der des Granulats über 60 M.-% betragen. Ansonsten sollte das Gemisch einen Anteil des Binders zwischen 1 M.% und 6 M.-% aufweisen. Wird ein hydraulischer, handelsüblicher Binder, Alphabond 300, verwendet werden, liegt der Anteil des Binders an dem Gemisch vorzugsweise bei 4,5 M.-%.

Bevorzugt ist als Verflüssiger ein Polycarboxylatether (PCE) vorgesehen, dessen Anteil an dem Gemisch zwischen 1 M.-% und 5 M.-% liegen sollte, bei einem PCE3, einem Polycarboxylatether der dritten Generation, vorzugsweise bei 3,6 M.-% liegen sollte.

Der Anteil des Abbindeverzögerers liegt zwischen 1 M.-% und 5 M.-%, bei der Verwendung von L(+)-Weinsäure als Abbindeverzögerer wird ein Anteil von 3,6 M.-% bevorzugt.

Die Wasserzugabe ist wenig kritisch, jedoch sollte, um eine breiartige Konsistenz zu erhalten, das Wasser-Gemischverhältnis zwischen 1 und 1,6 liegen, insbesondere bei 1,5.

Als Stabilisierungsmittel wird, wie üblich, eine Methylzellulose zur Anwendung kommen, deren Anteil bis zu 3,5 M.-% betragen kann.

Von besonderem Vorteil ist die Verwendung der erfindungsgemäßen Paste als auch nachträglich aufbringbare Schutzschicht auftemperatur- und/oder feuerbelastete Bauteile, völlig unabgängig von deren Geometrie.

Dabei wird insbesondere an statisch tragende Anker, hier vorzugsweise aus legiertem Stahl oder Gußstahl, gedacht, die mit einer derartigen Beschichtung aus dem neuartigen Gemisch versehen werden können. In Weiterbildung des Erfindungsgedankens kann vorgesehen sein, dass ein derart pastenbeschichteter Anker zusätzlich von einer Hülse umschlossen ist, bevorzugt aus einem Aluminat, insbesondere aus einem Alkalialuminat und/oder einem ErdalkaliAluminat, wobei in der Regel zunächst die Hülse auf den Anker geschoben wird und anschließend der Zwischenraum zwischen dem Anker und der Hülseninnenwand mit der Paste nach der Erfindung verfüllt wird.

Es wird zwar bevorzugt, dass diese Hülse einstückig, rohrartig ausgebildet ist, beispielsweise durch eine spanende Bearbeitung oder durch Gießen gefertigt, sie kann jedoch auch mehrfach axial sich erstreckende Trennfugen aufweisen, so dass sie beispielsweise auch nach einer Krümmung eines Ankers um diesen gelegt werden kann.

In konstruktiver Ausgestaltung ist vorgesehen, dass der Innendurchmesser der Hülse wenigstens das Doppelte des Durchmessers des Ankers beträgt.

Des Weiteren sollte die Wandstärke der Hülse mindestens 10 mm betragen.

Als eine weitere Maßnahme ist vorgesehen, dass die Hülse und die von der Hülse umgriffene Beschichtung in die Feuerfestauskleidung in Richtung der heißen Seite eingelassen sind. Die Länge der Beschichtung mit Hülse sollte derart bemessen sein, dass die Einlasstiefe wenigstens 20 mm beträgt, so dass eine thermodynamische Sperre ausgebildet wird, durch die eine Diffusion oder Kondensation der korrosiven Alkali- und Salzverbindungen und damit deren Einwirkung auf den Anker unterbunden wird. Die tragenden Stahlkonstruktionen werden so in einem hohen Maß geschützt.

Dazu trägt die geringe Wärmeleitfähigkeit von ca. 0,15 W/(mK) bis 0,7 W/(mK) der Beschichtung und der Hülse bei, da sich warmseitig eine höhere Temperatur im Anker einstellt, die über dem Taupunkt der korrosiven Gase liegt.

Die vorzüglichen, korrosionshemmenden Eigenschaften der Paste nach der Erfindung zeigt ein Korrosionstest auf, bei dem einer Paste gemäß der voranstehend erläuterten Zusammensetzung 30 M.-% einer der aggressivsten Salzmischungen aus Kaliumkarbonat, K₂CO₃, Kaliumsulfat, K₂SO₄ und Kaliumchlorid, KCl, im Verhältnis 1:1:1 1 zugegeben und zu einer Tablette mit einem Durchmesser von 50 mm und einer Stärke von 10 mm unter einem Druck von 40 MPa verpresst wurde. Nach einer thermischen Behandlung bei 1300 °C über 5 Stunden zeigte sich nach der Abkühlung der Tablette keinerlei Korrosion. Die gemessene Dehnung/Schwingung betrug weniger als 1,2 %.

Eine durch den Einsatz der formbaren, alkalibeständigen Paste nach der Erfindung erfolgte Sanierung kann die Lebensdauer der durch Alkaliangriffe beanspruchten Hochtemperaturanlagen in einfacher Weise und äußerst wirtschaftlich erhöhen und es kann nach der erfolgten Sanierung der thermische Energieaufwand durch Absenkung der Verbrennungstemperatur und damit auch der Ausstoß an umweltschädigendem CO₂ effizient reduziert werden.

Darüber hinaus erlaubt eine derart sanierte Feuerungsanlage die Erhöhung des Anteils der Sekundärbrennstoffe als Energieträger von derzeit etwa 70 % auf bis zu 100 %.

## Patentansprüche

1. Verwendung einer zu einem Wärmedämmstoff selbst aushärtenden Paste enthaltend ein Gemisch aus einem granulat- und/oder pulverförmigen Alkali-Aluminat und einem Erdalkali-Aluminat, Stell- und Stabilisierungsmittel, einen CaO-freien Binder, einen Verflüssiger und einen Abbindeverzögerer, wobei das Gemisch durch Zugabe von Wasser auf eine pump-, spritz-, spachtel- und/oder streichfähige Viskosität eingestellt ist, als Füllung für Fehlstellen in Feuerfestauskleidungen, in ausgehärteter, stückiger Form als Füllstoff in einem Feuerfestbeton, als Klebstoff zum Verkleben von massiven Teilen aus Alkali-Aluminat oder Erdalkali-Aluminat oder als aufgetragene Schutzschicht hochtemperatur- und/oder feuerbelasteter Bauteile.

2. Verwendung der Paste nach Anspruch 1, wobei durch die Zugabe des Wassers und des Abbindeverzögerers eine Topfzeit zwischen 15 Minuten und 3 Stunden eingestellt wird.

3. Verwendung der Paste nach einem oder mehreren der vorangehenden Ansprüche, wobei nach Aushärten der Paste der erhaltene Wärmedämmstoff eine Temperaturbeständigkeit von wenigstens 1300 °C aufweist.

4. Verwendung der Paste nach einem oder mehreren der vorangehenden Ansprüche, wobei nach Aushärten der Paste der erhaltene Wärmedämmstoff eine Rohdichte zwischen 0,3 g/cm³ und 1,0 g/cm³ aufweist.

5. Verwendung der Paste nach einem oder mehreren der vorangehenden Ansprüche, wobei nach Aushärten der Paste der erhaltene Wärmedämmstoff eine Porosität zwischen 60 % und 90 % aufweist.

6. Verwendung der Paste nach einem oder mehreren der vorangehenden Ansprüche, wobei nach Aushärten der Paste der erhaltene Wärmedämmstoff eine Wärmeleitfähigkeit zwischen 0.15 W/m*K und 0,7 W/m*K aufweist.

7. Verwendung der Paste nach Anspruch 1, wobei das Alkali-Aluminat und Erdalkali-Aluminat eine Korngröße kleiner 15 mm aufweist.

8. Verwendung der Paste nach Anspruch 7, wobei das Gemisch einen Anteil des granulatförmigen Aluminats zwischen 60 M.-% und 85 M.-% aufweist.

9. Verwendung der Paste nach Anspruch 1, wobei der Binder ein hydraulischer Binder ist.

10. Verwendung der Paste nach Anspruch 9, wobei der Binder eine Tonerdebasis aufweist.

11. Verwendung der Paste nach Anspruch 1, wobei der Binder ein organischer Binder ist.

12. Verwendung der Paste nach Anspruch 11, wobei der organische Binder ein Phenolharz ist.

13. Verwendung der Paste nach Anspruch 1, wobei der Binder ein Feuerfestmaterial ist.

14. Verwendung der Paste nach Anspruch 1, wobei das Gemisch einen Anteil des Binders zwischen 1 M.-% und 6 M.-% aufweist.

15. Verwendung der Paste nach Anspruch 1, wobei der Verflüssiger ein Polycarboxylatether ist

16. Verwendung der Paste nach Anspruch 15, wobei das Gemisch einen Anteil des Verflüssigers zwischen 1 M.-% und 5 M.-% aufweist.

17. Verwendung der Paste nach Anspruch 1, wobei der Abbindeverzögerer eine L(+)-Weinsäure ist.

18. Verwendung der Paste nach Anspruch 17, wobei das Gemisch einen Anteil des Abbindeverzögerers zwischen 1 M.-% und 5 M.-% aufweist.

19. Verwendung der Paste nach Anspruch 1, wobei das Wasser dem Gemisch in einem Verhältnis zwischen 1 und 1,6 zugegeben wird.

20. Verwendung der Paste nach Anspruch 1, wobei das Stabilisierungsmittel Methylzellulose ist.

21. Verwendung der Paste nach Anspruch 20, wobei der Anteil des Stabilisierungsmittels bis zu 3,5 M.-% beträgt.

22. Verwendung der Paste nach Anspruch 1, wobei sie als die Schutzschicht auf einen Anker aufgetragen wird und der pastenbeschichtete Anker von einer Hülse umschlossen wird und diese in eine Feuerfestauskleidung eingelassen wird.

23. Verwendung der Paste nach Anspruch 22, wobei die Hülse aus einem Alkali-Aluminat oder einem Erdalkali-Aluminat besteht.

24. Verwendung der Paste nach Anspruch 23, wobei die Hülse mehrfach axial sich erstreckende Trennfugen aufweist.

25. Verwendung der Paste nach Anspruch 24, wobei der Innendurchmesser der Hülse wenigstens das Doppelte des Durchmessers des Ankers beträgt.

## Claims

1. Use of a paste that self-cures to form a heat-insulating material, containing a mixture of granular and/or powdery alkali metal aluminate and alkaline earth metal aluminate, floating and stabilizing agents, a CaO-free binder, a liquefier and a retarder, wherein, by adding water, the mixture is adjusted to a viscosity capable of pumping, spraying, filling, and/or coating, as a filler for flaws in refractory liners, in the shape of hardened bits as a filler in fireproof concrete, as an adhesive for bonding massive elements made of alkali metal aluminate or alkaline earth metal aluminate, or as a protective coating applied to high-temperature- and/or fire-exposed construction elements.

2. Use of the paste according to claim 1, wherein by adding water and / or a retarder its pot life is set to between 15 minutes and 3 hours.

3. Use of the paste according to one of the preceding claims, wherein the heat-insulating material obtained after curing of the paste has a temperature resistance of at least 1300°C.

4. Use of the paste according to one of the preceding claims, wherein the heat-insulating material obtained after curing of the paste has a bulk density between 0.3 g / cm3 and 1.0 g / cm3.

5. Use of the paste according to one of the preceding claims, wherein the heat-insulating material obtained after curing of the paste has a porosity between 60% and 90%.

6. Use of the paste according to one of the preceding claims, wherein the heat-insulating material obtained after curing of the paste has a thermal conductivity between 0.15 W / m*K and 0.7 W / m*K.

7. Use of the paste according to one of the preceding claims, wherein the alkali metal aluminate and the alkaline earth metal aluminate have a grain size of less than 15 mm.

8. Use of the paste according to one of the preceding claims, wherein the proportion of the granular aluminate in the mixture is between 60 percent by mass and 85 percent by mass.

9. Use of the paste according to claim 1, wherein the binder is a hydraulic binder.

10. Use of the paste according to claim 9, wherein the binder is an alumina-based binder.

11. Use of the paste according to claim 1, wherein the binder is an organic binder.

12. Use of the paste according to claim 11, wherein the organic binder is a phenolic resin.

13. Use of the paste according to claim 1, wherein the binder is a refractory material.

14. Use of the paste according to claim 1, wherein the proportion of the binder in the mixture is between 1 percent by mass and 6 percent by mass.

15. Use of the paste according to claim 1, wherein the liquefier is polycarboxylate ether.

16. Use of the paste according to claim 1, wherein the proportion of the liquefier in the mixture is between 1 percent by mass and 5 percent by mass.

17. Use of the paste according to claim 1, wherein the retarder is L (+) tartaric acid.

18. Use of the paste according to claim 17, wherein the proportion of the retarder in the mixture is between 1 percent by mass and 5 percent by mass.

19. Use of the paste according to claim 1, wherein water is added to the mixture by a ratio of between 1 and 1.6.

20. Use of the paste according to claim 1, wherein the stabilizing agent is methyl cellulose.

21. Use of the paste according to claim 20, wherein the proportion of the stabilizer is up to 3.5 percent by mass.

22. Use of the paste according to claim 1, wherein it is applied as a protective coat to an anchor and the paste- coated anchor is surrounded by a sleeve, which is embedded in a refractory liner.

23. Use of the paste according to claim 22, wherein the sleeve consists of an alkali metal aluminate or of an alkaline earth metal aluminate.

24. Use of the paste according to claim 23, wherein the sleeve has multiple axially extending parting lines.

25. Use of the paste according to claim 24, wherein the inner diameter of the sleeve is at least twice the diameter of the anchor.

## Revendications

1. Utilisation d'une pâte autodurcissante se transformant dans un isolant thermique, contenant un mélange d'un aluminate de métal alcalin granulaire et / ou pulvérulente et d'un aluminate de métal alcalino-terreux, des agents thixotropants et stabilisants, un liant sans CaO, un liquéfacteur et un retardateur, dans lequel le mélange, par addition d'eau, est ajusté à une telle viscosité qu'il peut être pompé, pulvérisé, raclé et / ou passé en couche, en tant que charge pour des défauts dans des chemisages réfractaires, en tant que charge dans du béton résistant au feu sous forme de morceaux durcis, en tant que adhésif pour lier des éléments massifs en aluminate de métal alcalin ou en aluminate de métal alcalino-terreux, ou en tant que revêtement de protection appliqué à des éléments de construction exposés à haute température et / ou au feu.

2. Utilisation de la pâte selon la revendication 1, dans lequel par ajout d'eau et / ou d'un retardateur une durée de vie en pot est réglée à entre 15 minutes et 3 heures.

3. Utilisation de la pâte selon l'une des revendications précédentes, dans lequel le matériau d'isolation thermique obtenu après le durcissement de la pâte a une résistance à la température d'au moins 1300°C.

4. Utilisation de la pâte selon l'une des revendications précédentes, dans lequel le matériau d'isolation thermique obtenu après le durcissement de la pâte a une masse volumique apparente entre 0,3 g / cm³ et 1,0 g / cm³.

5. Utilisation de la pâte selon l'une des revendications précédentes, dans lequel le matériau d'isolation thermique obtenu après le durcissement de la pâte a une porosité entre 60 % et 90%.

6. Utilisation de la pâte selon l'une des revendications précédentes, dans lequel le matériau d'isolation thermique obtenu après le durcissement de la pâte a une conductivité thermique entre 0,15 W / m * K et 0,7 W / m * K.

7. Utilisation de la pâte selon l'une des revendications précédentes, dans lequel l'aluminate de métal alcalin et l'aluminate de métal alcalino-terreux ont une taille de grain inférieure à 15mm.

8. Utilisation de la pâte selon l'une des revendications précédentes, dans lequel la proportion de l'aluminate en forme de granulés dans le mélange est entre 60 % en masse et 85 % en masse.

9. Utilisation de la pâte selon la revendication 1, dans lequel le liant est un liant hydraulique.

10. Utilisation de la pâte selon la revendication 9, dans lequel le liant est un liant à base d'alumine.

11. Utilisation de la pâte selon la revendication 1, dans lequel le liant est un liant organique.

12. Utilisation de la pâte selon la revendication 11, dans lequel le liant organique est une résine phénolique.

13. Utilisation de la pâte selon la revendication 1, dans lequel le liant est un matériau réfractaire.

14. Utilisation de la pâte selon la revendication 1, dans lequel la proportion du liant dans le mélange est entre 1 % en masse et 6 % en masse.

15. Utilisation de la pâte selon la revendication 1, dans lequel le liquéfacteur est un éther de polycarboxylate.

16. Utilisation de la pâte selon la revendication 1, dans lequel la proportion du liquéfacteur dans le mélange est entre 1 % en masse et 5 % en masse.

17. Utilisation de la pâte selon la revendication 1, dans lequel le retardateur est un acide L (+) tartrique.

18. Utilisation de la pâte selon la revendication 17, dans lequel la proportion du retardateur dans le mélange est entre 1 % en masse et 5 % en masse.

19. Utilisation de la pâte selon la revendication 1, dans lequel l'eau est ajoutée au mélange dans une proportion de 1 à 1,6.

20. Utilisation de la pâte selon la revendication 1, dans lequel l'agent stabilisant est de la méthylcellulose.

21. Utilisation de la pâte selon la revendication 20, dans lequel la proportion de l'agent stabilisant est jusqu'à 3,5 % en masse.

22. Utilisation de la pâte selon la revendication 1, dans lequel elle est appliquée en tant que revêtement protecteur à un ancre, et l'ancre revêtu par la pâte est entourée d'un manchon, qui est noyée dans un chemisage réfractaire.

23. Utilisation de la pâte selon la revendication 22, dans lequel le manchon se compose d'un aluminate de métal alcalin ou d'un aluminate de métal alcalino-terreux.

24. Utilisation de la pâte selon la revendication 23, dans lequel le manchon a plusieurs joints de séparation s'étendant axialement.

25. Utilisation de la pâte selon la revendication 24, dans lequel le diamètre intérieur du manchon est au moins deux fois le diamètre de l'ancre.
